# EUROPÄISCHE PATENTANMELDUNG

(11) **EP 4 800 264 A1**
(43) Veröffentlichungstag der Anmeldung: **02.09.2026**
(21) Anmeldenummer: 25160461.7
(22) Anmeldetag: 27.02.2025
(51) Int. Cl.: F16H 1/46

(54) **MEHRSTUFIGES PLANETENGETRIEBE**

(71) Anmelder: ASS AG, 3186 Düdingen (CH)
(72) Erfinder: STADELMANN, Martin, 1719 Brünisried (CH)
(74) Vertreter: Lorenz Seidler Gossel Part. mbB

(57) **Zusammenfassung**

Die Erfindung betrifft ein mehrstufiges Planetengetriebe umfassend eine erste und eine zweite Planetenstufe, wobei die Sonnenräder der beiden Planetenstufen durch die Eingangswelle des Getriebes angetrieben sind, dadurch gekennzeichnet, dass der Planetenträger der ersten Stufe fixiert ist und das Hohlrad der ersten Planetenstufe das Hohlrad der zweiten Planetenstufe antreibt, wobei der Abtrieb des Getriebes durch den Planetenradträger der zweiten Planetenstufe erfolgt.

## Beschreibung

Die Erfindung betrifft ein mehrstufiges Planetengetriebe umfassend wenigstens eine erste und eine zweite Planetenstufe, wobei die Sonnenräder der beiden Planetenstufen durch die Eingangswelle des Getriebes angetrieben sind.

Getriebe kommen in zahlreichen Anwendungen zum Einsatz. Für viele Anwendungen, insbesondere im industriellen Bereich, der Automobil- und Fahrzeugtechnik, der Robotik und Automatisierung sowie der Luft- und Raumfahrtechnik werden hochuntersetzte Koaxialgetriebe verlangt, die hohe Drehmomente bei langsamen Bewegungen bereitstellen können, und ein kompaktes Design aufweisen. Für die Realisierung hoher Untersetzungen sind auf dem Markt Wellgetriebe, mehrstufige Stirnradgetriebe und mehrstufige Planetengetriebe bekannt.

Letztere umfassen für die Bereitstellung hoher Untersetzungen oftmals mehr als zwei seriell angeordnete Planetenstufen. Jede Stufe arbeitet nach dem Prinzip des Planetengetriebes, d.h. das Sonnenrad treibt die Planetenräder an, die wiederum im Hohlrad laufen. Der Planetenträger oder das Hohlrad überträgt die Kraft weiter, entweder auf die Ausgangswelle oder auf die nächste Stufe. Durch die Kaskadierung der Stufen wird der Ausgang der ersten Stufe zum Eingang der nächsten Stufe, wobei jede Stufe das Untersetzungsverhältnis der vorherigen Stufe multipliziert. Zur Erreichung einer hohen Untersetzung ist es nicht unüblich, dass bis zu fünf Getriebestufen seriell hintereinandergeschaltet werden. Mit der zunehmenden Anzahl an Stufen erhöht sich jedoch die Anzahl notwendiger Bauteile und damit die Komplexität des Getriebes. Zudem steigt mit zunehmender Bauteilanzahl der Bauraumbedarf in axialer Richtung an.

Wellgetriebe haben den Nachteil, dass das maximal zu übertragende Drehmoment im Verhältnis zum Außendurchmesser des Getriebes gering ist. Für die Bereitstellung hoher Ausgangsmomente sind ebenfalls großbauende Getriebe notwendig. Ein weiterer Nachteil der Wellgetriebe besteht in einem hohen lastfreien Anlaufdrehmoment sowie einem vergleichsweise geringen Wirkungsgrad.

Es bestand daher der Wunsch nach einer optimierten Lösung, die sich durch eine kompaktere und weniger komplexe Bauweise auszeichnet und dennoch die Realisierung eines hochuntersetzten Getriebes ermöglicht.

Gelöst wird diese Aufgabe durch ein mehrstufiges Planetengetriebe mit den Merkmalen des Anspruchs 1. Vorteilhafte Lösungen sind Gegenstand der abhängigen Ansprüche.

Die Erfindung geht von einem mehrstufigen Planetengetriebe aus, das eine erste und eine zweite Planetenstufe umfasst. Jede Stufe umfasst ein Sonnenrad, mehrere Planetenräder, vorzugsweise mindestens drei Planetenräder, einen Planetenradträger sowie ein Hohlrad mit Innenverzahnung. Die Sonnenräder beider Planetenstufen werden durch die Eingangswelle des Getriebes direkt angetrieben. Basierend auf einer solchen Kaskadierung einer ersten und zweiten Planetenstufe schlägt die Erfindung eine neuartige Kopplung beider Stufen vor, wodurch sich die gewünschte Untersetzung auch mit weniger Stufen und damit verringerter Komplexität des Aufbaus erzielen lässt. Erfindungsgemäß wird vorgeschlagen, den Planetenträger der ersten Stufe gegenüber dem Getriebegehäuse festzuhalten, d.h. die Planetenräder der ersten Stufe drehen sich nur um die eigene Achse. Durch die Fixierung des ersten Planetenradträgers dreht das Hohlrad bei angetriebenem Sonnenrad in entgegengesetzter Drehrichtung zur Eingangswelle bzw. dem Sonnenrad der ersten und zweiten Planetenstufe.

Zudem wird das Hohlrad der zweiten Planetenstufe durch das Hohlrad der ersten Planetenstufe, vorzugsweise über eine drehfeste Verbindung, direkt angetrieben, d.h. auch das Hohlrad der zweiten Planetenstufe dreht sich entgegen der Drehrichtung der Eingangswelle bzw. der Sonnenräder der ersten und zweiten Planetenstufe. Der Abtrieb des mehrstufigen Getriebes wird durch den Planetenradträger der zweiten Stufe bzw. der letzten Stufe gebildet.

Durch die Erfindung wird der Aufbau eines hochuntersetzten Getriebes in koaxialer Anordnung mit kompakten Baumassen und hoher Leistungsdichte ermöglicht. Mit Hilfe des erfindungsgemäßen Getriebes lässt sich ebenfalls auch eine Übersetzung ins "Schnelle" erzielen, indem die Antriebs- und Abtriebsseite getauscht werden, d.h. der Antrieb erfolgt über die zweite Planetenstufe, während der Abtrieb auf der Seite der ersten Planetenstufe erfolgt.

Besonders vorteilhaft ist es, wenn sich die Zähnezahlen der ersten und zweiten Planetenstufe voneinander unterscheiden. Bspw. kann sich die Zähnezahl der Innenverzahnungen der Hohlräder für die erste und zweite Stufe voneinander unterscheiden. Besonders bevorzugt kann die Innenverzahnung des Hohlrades der zweiten Stufe eine geringere Zähnezahl aufweisen als die Innenverzahnung des Hohlrades der ersten Stufe. Die Sonnenräder der ersten und zweiten Stufe sehen bevorzugt identische Zähnezahlen vor, da dies fertigungstechnische Vorteile bietet. Alternativ können auch unterschiedliche Zähnezahlen für die beiden Sonnenräder vorgesehen werden. Durch eine solche Konstellation lässt sich eine sehr hohe Untersetzung realisieren.

Gemäß einer bevorzugten Ausführung der Erfindung sitzen das Sonnenrad der ersten und zweiten Stufe auf einer gemeinsamen Welle, insbesondere auf der Eingangswelle des Getriebes. Denkbar ist auch die Verwendung eines gemeinsamen Sonnenrades für beide Stufen. Das Sonnenrad weist in diesem Fall eine ausreichende Zahnbreite auf, so dass diese mit den Planetenrädern beider Stufen in axialer Richtung in Eingriff stehen kann.

Wie bereits vorstehend erläutert wurde, treibt das Hohlrad der ersten Planetenstufe das Hohlrad der zweiten Planetenstufe direkt an, insbesondere sind die Hohlräder der ersten und zweiten Stufe drehfest miteinander verbunden. Eine besonders kompakte Bauweise kann beispielsweise dadurch realisiert werden, indem die beiden Hohlräder der ersten und zweiten Planetenstufe durch ein gemeinsames Hohlrad gebildet sind, d.h. die Planetenräder der ersten und zweiten Stufe sind durch das gemeinsame Hohlrad umgeben. Das Hohlrad weist in diesem Fall zwei verschiedene Innenverzahnungen auf, die in axialer Richtung versetzt zueinander liegen.

Die Lagerung des Hohlrades, insbesondere des gemeinsamen Hohlrades beider Stufen kann mittels Gleit- und/oder Wälzlager erreicht werden. Denkbar ist eine ein- oder beidseitige Lagerung des Hohlrades mittels Gleit- und/oder Wälzlager auf einem bzw. beiden Planetenradträgern. Alternativ kann die Lagerung auch gegen das Gehäuse abgestützt werden. Anstelle von dedizierten Lagern kann eine radiale Lagerung des Hohlrads auch nur über die Planetenräder der Planetenstufen erreicht werden. Eine axiale Lagerung des Hohlrades könnte in diesem Fall durch geeignete Modifikation des Zahnprofils der Innenverzahnungen und/oder der Planetenradträger erreicht werden. Denkbar ist in diesem Zusammenhang eine konische Zahnmodifikation mit in axialer Länge zunehmender Zahnhöhe. Insbesondere nimmt die Zahnhöhe beider Innenverzahnungen in entgegengesetzter Richtung zu. Die dadurch bedingte Abnahme des Zahnspiels zwischen Innenverzahnung des Hohlrades und der Planetenräder in axialer Richtung sorgt für eine axiale Begrenzung und damit axiale Lagerung des Hohlrades. Alternativ ist auch eine axiale Lagerung des Hohlrades durch Schrägverzahnung möglich. In diesem Fall wäre die Schrägstellung der Planetenstufe eins und zwei in entgegengesetzter Richtung auszuführen.

Der neuartige Aufbau des mehrstufigen Planetengetriebes lässt eine besonders kompakte Bauweise mit vergleichsweise wenigen Bauteilen zu. Auch wenn das Getriebe aus drei oder mehreren Stufen bestehen könnte, kommt das Getriebe aufgrund des erfindungsgemäßen Ansatzes auch nur mit zwei Planetenstufen aus, um eine hohe Untersetzung zu ermöglichen. Es ist daher besonders bevorzugt, wenn das Getriebe genau zwei Planetenstufen umfasst.

Der neuartige Aufbau des mehrstufigen Planetengetriebes lässt eine Ausführung als Hohlwellengetriebe zu. Für diese Variante wären die Eingangswelle, die Sonnenräder, der Planetenradträger, sowie der Abtrieb mit einer zentrischen Bohrung zu versehen. Für diesen Fall sind die Sonnenräder entsprechend grösser zu gestalten. Durch den erfindungsgemässen Ansatz können trotz der grösseren Sonnenräder hohe Untersetzungen realisiert werden.

Gemäß einer vorteilhaften Weiterbildung der Erfindung kann vorgesehen sein, dass wenigstens eine der Planetenstufen verstellbar ist. Bspw. kann ein Verstellmechanismus vorgesehen sein, der den Zahneingriff innerhalb einer Planetenstufe anpassen kann. Das Getriebe kann dadurch mit variierbarem Untersetzungsverhältnis betrieben werden. Ein solcher Verstellmechanismus kann bspw. eine Verlagerung der Planetenräder vorsehen, um dadurch den Abstand der Planetenräder zum Hohlrad und/oder zum Sonnenrad verändern zu können. Denkbar ist auch der Einsatz eines in Axialrichtung verschiebbaren Hohlrades als Verstellmechanismus. Durch eine mögliche axiale Verschiebung kann das Hohlrad bzw. wenigstens eine Innenverzahnung wahlweise außer Eingriff mit den zugeordneten Planetenrädern gebracht werden. Eine optionale Feststellbremse gestattet bei Bedarf eine Feststellung des Hohlrades gegenüber dem Getriebegehäuse. Alternativ kann ein zweigeteiltes Hohlrad eingesetzt werden, welches über eine schaltbare Kupplung die beiden Innenverzahnungen drehfest miteinander verbindet.

Der Einsatz des erfindungsgemäßen Getriebes kann exemplarisch in einer industriellen Anwendung, im Bereich der Automobil- und Fahrzeugtechnik, in der Robotik- und Automatisierungstechnik, in der Luft- und Raumfahrtechnik oder in davon abweichenden Anwendungen erfolgen.

Weitere Vorteile und Eigenschaften der Erfindung sollen nachfolgend anhand der Figurendarstellung näher beschrieben werden. Es zeigen:
- Figur 1:: eine schematische Darstellung des erfindungsgemäßen Planetengetriebes gemäß erster Ausführung,
- Figur 2:: eine perspektivische Explosionsdarstellung des erfindungsgemäßen Planetengetriebes,
- Figuren 3-3c:: schematische Darstellungen des erfindungsgemäßen Planetengetriebes gemäß unterschiedlicher Varianten, und
- Figuren 4, 4b:: eine schematische Darstellung einer weiteren Ausführungsform des erfindungsgemäßen Getriebes mit verstellbarem Untersetzungsverhältnis.

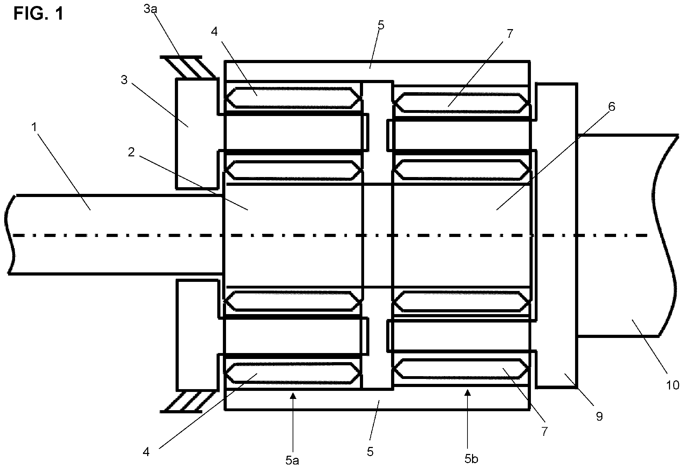

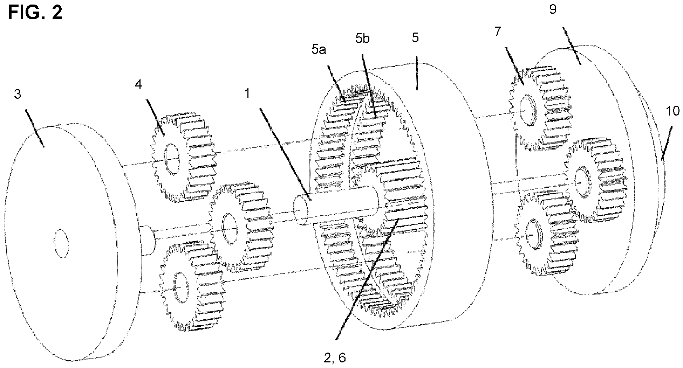

Figur 1 zeigt das erfindungsgemäße mehrstufige Planetengetriebe mit seiner Eingangswelle 1 und dem Getriebeabtrieb 10. Das Getriebe umfasst die beiden Planetenstufen mit jeweils einem Sonnenrad 2, 6, einem Planetenradträger 3, 9 mit jeweils mindestens drei Planetenrädern 4, 7 sowie einem Hohlrad 5. Die Antriebswelle 1 treibt das Sonnenrad 2 der ersten Planetenstufe an. Ferner sitzt das Sonnenrad 6 der zweiten Stufe ebenfalls auf der Eingangswelle 1, d.h., das Sonnenrad 6 der zweiten Planetenstufe ist fest mit dem Sonnenrad 2 der ersten Planetenstufe und somit mit dem Antrieb 1 verbunden, weshalb auch dieses mit der Drehgeschwindigkeit und Drehrichtung der der Antriebswelle 1 rotiert. Alternativ zur gezeigten Darstellung der Figur 1 könnte auch ein gemeinsames Sonnenrad 2, 6 mit ausreichender Zahnbreite eingesetzt werden, so wie dies in Figur 2 der Fall ist. Das Getriebe der Figur 2 ist mit Ausnahme des Sonnenrades identisch zur Ausführung aus Figur 1.

Der Planetenradträger 3 der ersten Stufe ist drehfest mit dem Gehäuse verbunden, weshalb die Planetenräder 4 der ersten Stufe ausschließlich um ihre eigene Drehachse drehen. Das Hohlrad 5 umfasst eine erste Innenverzahnung 5a, die mit den Planetenrädern 4 in Eingriff steht. Aufgrund des festgelegten Planetenradträgers 3 dreht sich das Hohlrad 5 bzw. die Innenverzahnung 5a in entgegengesetzter Richtung zum Sonnenrad 2.

Das Hohlrad 5 umfasst eine zweite Innenverzahnung 5b für die zweite Planetenstufe, die mit den Planetenrädern 7 der zweiten Stufe kämmt. Da die Innenverzahnungen 5a, 5b Bestandteil eines einzigen Bauteils 5 sind, sind die "Hohlräder" beider Stufen drehfest miteinander verbunden. Im gezeigten Ausführungsbeispiel werden folglich beide Hohlräder durch ein gemeinsames Hohlrad 5 gebildet, dessen axiale Länge ausreicht, um sowohl die Planetenräder 4 der ersten Stufe als auch die Planetenräder 7 der zweiten Stufe zu umgeben und mit diesen im Eingriff zu stehen. Die Innenverzahnungen 5a, 5b des Hohlrades 5 sind jedoch für beide Stufen unterschiedlich, d.h., sie weichen in ihrer Zähnezahl voneinander ab. Insgesamt besteht zwischen den beiden Planetenstufen ein Unterschied in der Zähnezahl. Alternativ wäre auch eine Bauform mit separaten Bauteilen für die Innenverzahnungen 5a, 5b möglich.

Alternativ zur gezeigten Ausführung des Hohlrades 5 können die Innenverzahnungen 5a, 5b auch durch zwei separate Einzelteile gebildet sein. Die beiden Einzelteile wären in diesem Fall drehfest direkt miteinander gekoppelt.

Der Abtrieb 10 des Getriebes erfolgt über den Planetenradträger 9 der zweiten Planetenstufe. Durch die entgegengesetzte Drehrichtung des Hohlrades 5b zum Sonnenrad 6 wird entsprechend dem Zähnezahl-Verhältnis der beiden Planentenstufen eine sehr hohe Untersetzung realisiert, da sich die Planetenräder 7 der zweiten Planetenstufe überwiegend um sich selbst drehen und nur langsam den Planetenradträger 9 mitdrehen.

Nachfolgend wird ein konkretes Beispiel für das erfindungsgemäße Getriebe mit geringer Untersetzung sowie hoher Untersetzung aufgeführt.

Für die erste Planetenstufe wird ein Sonnenrad 2 mit einer Zähnezahl zs=16 verwendet. Für die erste Stufe sind drei Planetenräder 4 vorgesehen. Die Zähnezahl der Innenverzahnung 5a des Hohlrades 5 der ersten Stufe entspricht Z_{A}=50. Damit die Planetenräder gleichmäßig um den Umfang verteilt werden können, muss das Verhältnis (z_{S}+z_{A}) / n ganzzahlig sein, wobei n der Anzahl der Planetenräder entspricht. Diese Bedingung ist vorliegend erfüllt.

Für die zweite Planetenstufe wird ein Sonnenrad 6 mit gleicher Zähnezahl zs=16 verwendet. Auch werden für die zweite Stufe drei Planetenräder 7 vorgesehen. Die Zähnezahl der Innenverzahnung 5b des Hohlrades 5 der zweiten Stufe entspricht z_{A}=44. Auch hier ist das Verhältnis (z_{S}+z_{A}) / n ganzzahlig. Mit den definierten Zähnezahlen lässt sich eine Untersetzung des Getriebes von 1:32,25 erreichen.

Eine hohe Untersetzung lässt sich bspw. mit nur einer geringfügigen Anpassung des Zahnverhältnisses erzielen. Wird beispielsweise eine Zähnezahl für die Sonnenräder 2, 6 beider Stufen von zs=14 verwendet und die Innenverzahnung 5a des Hohlrades 5 der ersten Stufe mit einer Zähnezahl von z_{A}=50 Zähne festgelegt, während die Zähnezahl der Innenverzahnung 5b für die zweite Stufe mit z_{A}=49 vorgegeben wird. Hier sind 4 Planetenräder für die Planetenstufe 1 und 3 Planetenräder für die Planetenstufe 2 zu verwenden, damit das Verhältnis (z_{S}+z_{A}) / n ganzzahlig ist. So kann eine deutlich höhere Untersetzung von 1:225 erzielt werden.

Eine Übersetzung ins Schnelle lässt sich dadurch erzielen, dass die Antriebsseite und Abtriebsseite gedreht werden. In einer solchen Konfiguration würde sich der Antrieb 10 auf der Seite der zweiten Planetenstufe befinden und der Abtrieb 1 auf der Seite der ersten Planetenstufe.

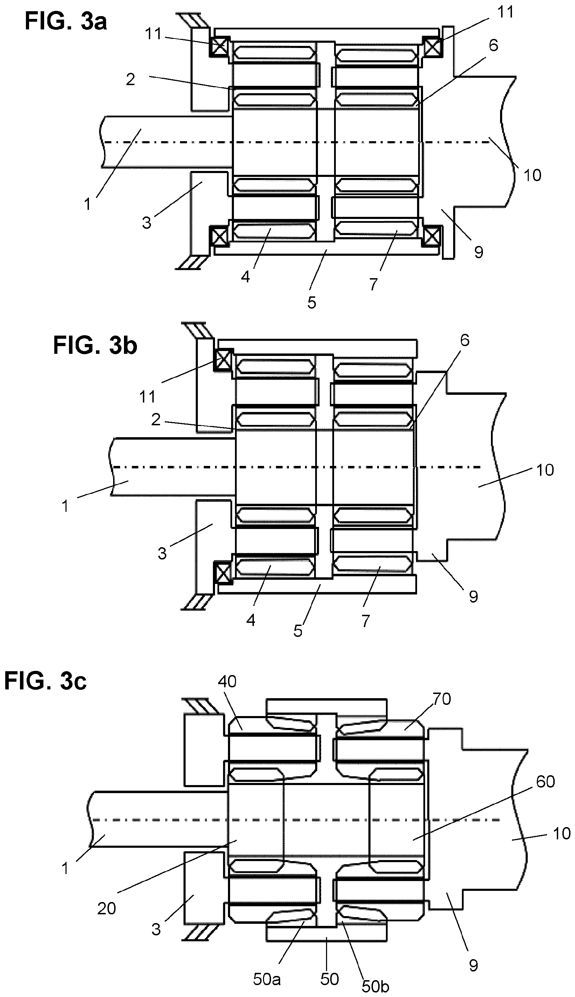

Wie bereits oben ausgeführt wurde, wird für beide Stufen ein gemeinsames Hohlrad 5 eingesetzt. Die Lagerung des Hohlrades 5 kann mittels Wälz- oder Gleitlagern 11 erfolgen. Hierfür kommt eine einseitige Lagerung an wenigstens einem der Planetenradträger 3 (siehe Figur 3b) oder idealerweise eine beidseitige Lagerung an beiden Planetenradträgern 3, 9 (siehe Figur 3a) in Frage. Mittels der verwendeten Lager 11 wird idealerweise sowohl eine radiale als auch axiale Lagerung des Hohlrades gewährleistet.

Figur 3c zeigt eine alternative Ausgestaltung, die ohne zusätzliche Lager auskommt. Eine Radiallagerung des Hohlrades 50 wird alleine durch die Planetenräder 40, 70 bereitgestellt. Zusätzlich kann das Zahnprofil beider Innenverzahnungen 50a, 50b mit einer konischen Profilmodifikation über die Zahnbreite versehen sein, welche so ausgeführt ist, dass die Profilmodifikation der Innenverzahnung 50a und der Innenverzahnung 50b in entgegengesetzter Richtung ausgeführt sind. In der Darstellung der Figur 3c nimmt die Zahnhöhe der Innenverzahnungen 50a, 50b in Richtung der jeweiligen äußeren Stirnseite des Hohlrades 50 zu. Auch die Planetenräder 40, 70 können mit einer korrespondierenden konischen Profilmodifikation mit zunehmender Zahnhöhe in Richtung des zugeordneten Planetenradträgers 3, 9 versehen sein. Bei der Montage des Getriebes werden die Planetenräder 40, 70 in axialer Richtung verschoben, wodurch das Flankenspiel zwischen Innenverzahnung 50a, 50b des Hohlrades und Planetenrädern 40, 70 über die konische Profilmodifikation minimiert wird. Dies führt zu einer radialen und axialen Zentrierung des Hohlrades 50. Zusätzlich oder alternativ können die Planetenräder 40, 70 auch über eine Axialkraft positioniert werden, um das Flankenspiel zu beeinflussen.

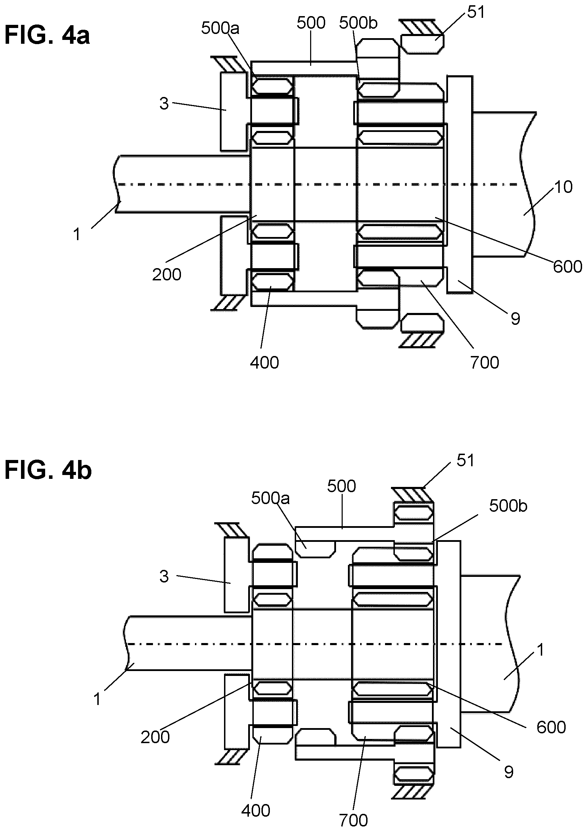

Eine weitere vorteilhafte Modifikation des erfindungsgemäßen Getriebes umfasst einen Mechanismus zur variablen Änderung der Untersetzung. Dargestellt ist in den Figuren 4a, 4b eine Ausführung, die eine axiale Verschiebung des gemeinsamen Hohlrades 500 parallel zur Welle 1 gestattet. Die Ausführung erlaubt den Betrieb des Getriebes gemäß der Erfindung (Figur 4a). Das Hohlrad 500 befindet sich hier in einer ersten axialen Position, in dieser die Innenverzahnungen 500a, 500b mit den jeweiligen Planetenränder 400, 700 der ersten und zweiten Stufe in Eingriff stehen. Soll das Übersetzungsverhältnis des Getriebes verändert werden, so wird das Hohlrad 500 in axialer Richtung verschoben, wodurch die erste Innenverzahnung 500a außer Eingriff kommt und nur noch die weite Innenverzahnung 500b mit den Planetenrädern 700 der zweiten Stufe in Eingriff steht. Damit die Planetenräder 700 der zweiten Stufe unabhängig von der axialen Position des Hohlrades 500 stets mit der Innenverzahnung 500b in Eingriff bleiben, sind diese mit einer ausreichenden Zahnbreite dimensioniert, deren Länge größer ist als die Zahnbreite der Planetenräder 400 der ersten Stufe.

Über eine Bremse 51 kann das Hohlrad 500 in der zweiten Axialposition gegenüber dem Gehäuse festgehalten werden. Dadurch dreht das Hohlrad 500 in dieser Position nicht mehr und das resultierende Untersetzungsverhältnis des Getriebes entspricht der Untersetzung der zweiten Stufe. Bei der Bauform mit separaten Bauteilen für die Innenverzahnungen 500a, 500b, wäre dann ein Mechanismus notwendig, um die Verbindung zwischen den beiden Hohlrädern zu lösen und das Hohlrad der Innenverzahnung 500b gegenüber dem Getriebegehäuse festzuhalten.

## Patentansprüche

1. Mehrstufiges Planetengetriebe umfassend eine erste und eine zweite Planetenstufe, wobei die Sonnenräder (2, 20, 200, 6, 60, 600) der beiden Planetenstufen durch die Eingangswelle (1) des Getriebes angetrieben sind,
**dadurch gekennzeichnet, dass** der Planetenträger (3) der ersten Stufe fixiert ist und das Hohlrad (5, 50, 500) der ersten Planetenstufe das Hohlrad (5, 50, 500) der zweiten Planetenstufe antreibt, wobei der Abtrieb (10) des Getriebes durch den Planetenradträger (9) der zweiten Planetenstufe erfolgt.

2. Mehrstufiges Planetengetriebe **dadurch gekennzeichnet, dass** sich die Zähnezahl der ersten und zweiten Planetenstufe voneinander unterscheiden.

3. Mehrstufiges Planetengetriebe nach Anspruch 2, **dadurch gekennzeichnet, dass** die Innenverzahnung (5b, 50b, 500b) des Hohlrades (5, 50, 500) der zweiten Stufe eine geringere Zähnezahl aufweist als die Innenverzahnung (5a, 50a 500a) des Hohlrades (5, 50, 500) der ersten Stufe und/oder die Sonnenräder (2, 20, 200, 6, 60, 600) der ersten und zweiten Stufe mit identischer Zähnezahl ausgeführt sind.

4. Mehrstufiges Planetengetriebe nach Anspruch 1, **dadurch gekennzeichnet, dass** die Sonnenräder (2, 20, 200, 6, 60, 600) der ersten und zweiten Stufe auf der gemeinsamen Eingangswelle (1) des Getriebes sitzen.

5. Mehrstufiges Planetengetriebe nach einem der vorstehenden Ansprüche, **dadurch gekennzeichnet, dass** die Hohlräder (5, 50, 500) der ersten und zweiten Stufe drehfest miteinander verbunden sind.

6. Mehrstufiges Planetengetriebe nach Anspruch 5, **dadurch gekennzeichnet, dass** die Hohlräder (5a, 5b, 50a, 50b, 500a, 500b) der ersten und zweiten Planetenstufe durch ein gemeinsames Hohlrad (5, 50, 500) gebildet sind.

7. Mehrstufiges Planetengetriebe nach Anspruch 6, **dadurch gekennzeichnet, dass** das gemeinsame Hohlrad (5, 50, 500) ein- oder beidseitig mittels einem oder mehrerer Wälz- oder Gleitlager (11) auf den Planetenradträgern (3, 9) der ersten und zweiten Stufe und/oder dem Getriebegehäuse gelagert ist.

8. Mehrstufiges Planetenradgetriebe nach Anspruch 6, **dadurch gekennzeichnet, dass** das gemeinsame Hohlrad (5, 50, 500) und/oder die Planetenräder (40, 70) eine konische Profilmodifikation mit konisch zunehmender Zahnhöhe aufweisen.

9. Mehrstufiges Planetenradgetriebe nach Anspruch 6, **dadurch gekennzeichnet, dass** das gemeinsame Hohlrad (5, 50, 500) und/oder die Planetenräder (40, 70) eine Schrägverzahnung aufweisen, wobei die Schrägstellung der Planetenstufen in entgegengesetzter Richtung ausgeführt ist, um die axiale Lagerung des gemeinsamen Hohlrades zu bewirken.

10. Mehrstufiges Planetengetriebe nach einem der vorstehenden Ansprüche, **dadurch gekennzeichnet, dass** das Getriebe ein hochuntersetztes Getriebe ist.

11. Mehrstufiges Planetengetriebe nach einem der vorstehenden Ansprüche, **dadurch gekennzeichnet, dass** das Planetengetriebe genau zwei Planetenstufen umfasst.

12. Mehrstufiges Planetenradgetriebe nach einem der vorstehenden Ansprüche, **dadurch gekennzeichnet, dass** wenigstens eine der Planetenstufen verstellbar ist und durch einen Verstellmechanismus der Zahneingriff änderbar ist.

13. Mehrstufiges Planetengetriebe nach Anspruch 12, **dadurch gekennzeichnet, dass** der Verstellmechanismus eine variable Einstellung des Abstandes zwischen den Zahnrädern der Stufe ermöglicht und/oder axial verschiebbares Hohlrad (500) umfasst.

14. Mehrstufiges Planetengetriebe nach Anspruch 13, **dadurch gekennzeichnet, dass** das axial verschiebbare Hohlrad (500) zwischen wenigstens zwei Axialpositionen verschiebbar ist, wobei das Hohlrad (500) mit seinen Innenverzahnungen (500a, 500b) in eine erste axiale Position mit den Planetenrädern (400, 700) der jeweiligen Stufe in Eingriff steht und in einer zweiten axialen Position nur mit einer der Planetenstufen in Eingriff steht.

15. Mehrstufiges Planetengetriebe nach einem der vorstehenden Ansprüche, **dadurch gekennzeichnet, dass** die Eingangswelle (1), die Sonnenräder (2, 20, 200, 6, 60, 600), der Planetenradträger (9), sowie der Abtrieb (10) mit einer zentrischen Bohrung versehen sind.
